# EUROPEAN PATENT SPECIFICATION

(11) **EP 1 796 318 B1**
(45) Date of publication and mention of the grant of the patent: **27.07.2016**
(21) Application number: 05714800.9
(22) Date of filing: 07.03.2005
(51) Int. Cl.: H04L 12/42, H04L 12/18, H04L 12/437

(54) **A METHOD FOR PROVIDING POINT-TO-POINT SERVICE IN RESILIENT PACKET RING**
VERFAHREN ZUR BEREITSTELLUNG VON PUNKT-ZU-PUNKT-DIENST IN EINEM NACHGIEBIGEN PAKETRING
PROCEDE POUR FOURNIR UN SERVICE POINT-A-POINT DANS UN ANNEAU DE PAQUETS RESISTANT

(30) Priority: 28.09.2004 CN 200410080098
(43) Date of publication of application: 13.06.2007
(73) Proprietor: ZTE Corporation, Guangdong Province 518057 (CN)
(72) Inventor: YU, Zhiyong, ZTE Plaza, Keji Road South,, Guangdong Province 518057, P. R. China (CN)
(74) Representative: Zerbi, Guido Maria
(86) International application number: PCT/CN2005/000269
(87) International publication number: WO 2006/034613

(56) References cited:
- EP-A1- 1 388 979
- WO-A1-2004/036836
- US-A1- 2003 074 469
- CASTELLANO R: "Encapsulation Bridging and 802.17" 20010910, [Online] 10 September 2001 (2001-09-10), pages 1-19, XP002600126 Retrieved from the Internet: URL:http://www.ieee802.org/17/documents/pr esentations/sep2001/rc_ebridge_ 02.pdf> [retrieved on 2010-09-10]
- RIVER STONE: "How Ethernet, RPR and MPLS Work Together" INTERNET CITATION 1 September 2001 (2001-09-01), XP002231554 Retrieved from the Internet: URL:http://www.riverstonenet.com/pdf/unifi ed_future.pdf [retrieved on 2003-02-17]

## Description

### Field of the Invention

The present invention relates to Resilient Packet Ring (RPR), more particularly to a method for end-to-end service process over Resilient Packet Ring (RPR).

### Background of the Invention

Resilient Packet Ring (hereinafter called RPR for short) technique was advanced in 2000. It is a new kind of MAC layer protocol that optimizes data service transmission over a ring structure. By using the ring structure and with the support protocol of MAC layer, the technique solves such problems as bandwidth sharing, protection, QoS guarantee etc which happen during packet service transmission. The bandwidth of the services with middle and low level priority is controlled by the inner algorithm and has the feature of automatic modification, which is the reason why it is called Resilient Packet Ring.

RPR MAC is adaptive to many kinds of physical layers, and can transmit many kinds of services like data, voice, image effectively. It combines the characters of Ethernet technique, such as being economical, flexible, expandable, and absorbs the virtue of 50ms quick protection of SDH ring net, and has the technical advantages of network topology automatic finding, ring bandwidth sharing, equitable distribution, strict classification of service (CoS) and so on. It aims at providing economical and effective Metropolitan Area Network solutions while not reducing the performance and reliability of the network.

Due to the above virtues of RPR, RPR network will be used more widely as carrier of the existing Ethernet service in Metropolitan Area Network. When the existing L2 Ethernet service is adapted to the RPR MAC, the RPR device adopts a method based on learning and searching to judge each Ethernet frame, and according to the relationship between the learned RPR station address and Ethernet MAC address, determines the destination station to which the frame should be sent. The above method is similar to the Ethernet switching method which is widely used currently, it is easily to use and the subscribers do not need to care about and know how the data frames are transmitted to the destination station.

The document EP1388979A1 discloses a method and apparatus for an end-to-end connection between an RPR and an MPLS network, where the RPR network is linked to the MPLS network (and vice versa) through a TLS layer. The document CASTELLANO R: "Encapsulation Bridging and 802.17"introduces encapsulation bridging related to 802.17.

Although the switching method can meet most of the demands, it also brings about the following problems: before learning the relationship between the RPR station address and Ethernet MAC address, or for the broadcasted Ethernet frames, the user data frames will be broadcasted over the RPR network so that all the stations can receive and learn the frames. That is to say, the RPR network realized by this way is actually a broadcast field shared by all users. Therefore, when establishing the Ethernet Private Line (EPL) service or the Ethernet Virtual Private Line (EVPL) service, they can not be achieved as there is no concept of line from end to end.

By the Virtual Local Network Identifier (VLAN ID), Multi-protocol Label Switching (MPLS) or other service separation identifiers, these devices can simulate the private services by the way of filtration. In other words, different separation identifiers are set to separate different private lines, the separation identifiers are added at source station and removed at destination station. At other stations, when services carrying separation identifiers not up to the demands are received, the stations will filtrate such services and not take them. However, since the identifier can only be filtrated at the destination station, the broadcast frames which are sent from the source station to the RPR ring network are still broadcasted over the whole network. Although the stations not belonging to the private line filtrate these broadcast frames, the network bandwidth has already been wasted. The problem can be especially serious when there are many broadcast services in the private lines, and it does not accord with the definition of the private line service.

### Summary of the Invention

The technical problem to be solved in this invention is to advance a method in which the end-to-end services can be achieved on the Resilient Packet Ring without the switch process.

In order to solve said technical problem, the invention provides a method for providing end-to-end services over the Resilient Packet Ring, characterized in including the follow steps of:
Step 1, classifying and identifying the access services of the Resilient Packet Ring nodes;
Step 2, establishing an end-to-end service configuration table on the Resilient Packet Ring nodes, including service identifier and configuration information corresponding to the static destination station address;
Step 3, the adaptation layer searching for corresponding item in said end-to-end service configuration table according to its carried service identifier information after the Resilient Packet Ring nodes receiving data frame;
Step 4, after receiving the returned searching result, the adaptation layer judging whether the service to which the received data frame belonged is an end-to-end service, if yes, performing the next step, otherwise performing step 7;
Step 5, judging whether the service should be discarded, if yes, ending the processing after discarding the service, otherwise performing the next step;
Step 6, extracting the static destination station address from the searching result to be the destination station address to which the service is transmitted on the Resilient Packet Ring, then performing step 8;
Step 7, performing L2 switch process; and
Step 8, sending to MAC layer of the Resilient Packet Ring nodes for processing after the following adaptation operation.

Further, the above method can also have the following features: said end-to-end service configuration table further includes the information of whether to be discarded corresponding to the service identifier, in addition, the Resilient Packet Ring nodes judge the static destination station address configured in the table according to the information of each station of the Resilient Packet Ring in the Resilient Packet Ring topology database with a certain period. When there is no static destination station address in the topology database, the service corresponding to the item is set to discard and is forbidden to get onto the ring. If the configured static destination station address exists in the topology database and is valid, the service corresponding to the item is set as "not discard". In said step 5, the information of whether to discard the service is obtained directly from the searching result.

Further, the above method can also have the following features: in said step 5, it is judged real time whether the static destination station address in the searching result is valid or not, If yes, sending the service, otherwise, discarding the service.

Further, the above method can also have the following features: said end-to-end service configuration table further includes the information of end-to-end-enable corresponding to the service identifier. In said step 3, the adaptation layer searches for the corresponding item in said end-to-end service configuration table according to the service identifier information carried by the received data frame, and judges whether the service to which the received data frame belongs is end-to-end service according to the end-to-end-enable information in the searching results.

Further, the above method can also have the following features: said end-to-end service configuration table only configures the current available items of end-to-end service. In said step 4, if the searching results reveal that there is no corresponding item, it can be determined that the service to which the received data frame belongs is not end-to-end service, if the searching results reveal that there is corresponding item, the service is end-to-end service.

Further, the above method can also have the following feature: in said step 1, the access service is classified based on the Ethernet port.

Further, the above method can also have the following feature: in said step 1, the service is classified and identified by adopting Virtual LAN Identifier (VLAN ID).

Further, the above method can also have the following feature: in said step 1, the service is classified and identified by adopting Multi-protocol Label Switching (MPLS).

With the method of this invention, by providing configuration of the static destination station on the RPR network, the assigned service can directly determine the destination station address on the RPR network without switch, so that the end-to-end configuration is realized over the RPR network, the problem that the existing RPR devices can not provide service to private line can be solved, and the resource of network bandwidth can also be economized. It can be applied in such occasions as building Ethernet private line over RPR network.

### Brief Description of the Drawings

Figure 1 is the flowchart of the embodiment of this invention.
Figure 2 is the schematic view of networking for the embodiment of providing end-to-end service on the Resilient Packet Ring in this invention.

### Preferred Embodiments of the Invention

In the following, the specific embodiment of the invention will be further illustrated in details in association with the drawings and implementing examples.

Generally, RPR devices include a RPR adaptation layer, a RPR MAC layer and a physical layer. The RPR adaptation layer accomplishes the mapping process from Ethernet service to RPR MAC, assigns the destination station address of the Ethernet frame, and so on. It is a must routine for the Ethernet frame converting to RPR data frame.

In traditional design of RPR adaptation layer, a switch unit has to be included. The switch unit learns the relationship between the Ethernet source MAC address (usually further includes VLAN ID) in the data frame received from RPR network and the RPR source station address, and storages the relationship in the inner memory. When the Ethernet adaptation layer receives an Ethernet frame from the user side, it searches in the switch unit according to the Ethernet destination MAC address (usually further including VLAN ID) of the frame. When the switch unit finds the destination MAC address, it will return the RPR station address corresponding to the Ethernet MAC address. When RPR adapts, the station address will be filled into the RPR frame overhead as the RPR destination station address; when the switch unit does not find the destination MAC address, it will return information of "not found", the frame will be broadcasted to the RPR network when RPR adapts. The invention improves the above functions of the RPR layer and provides a service based switch bypassing unit and a method for determining the destination station address of end-to-end service directly.

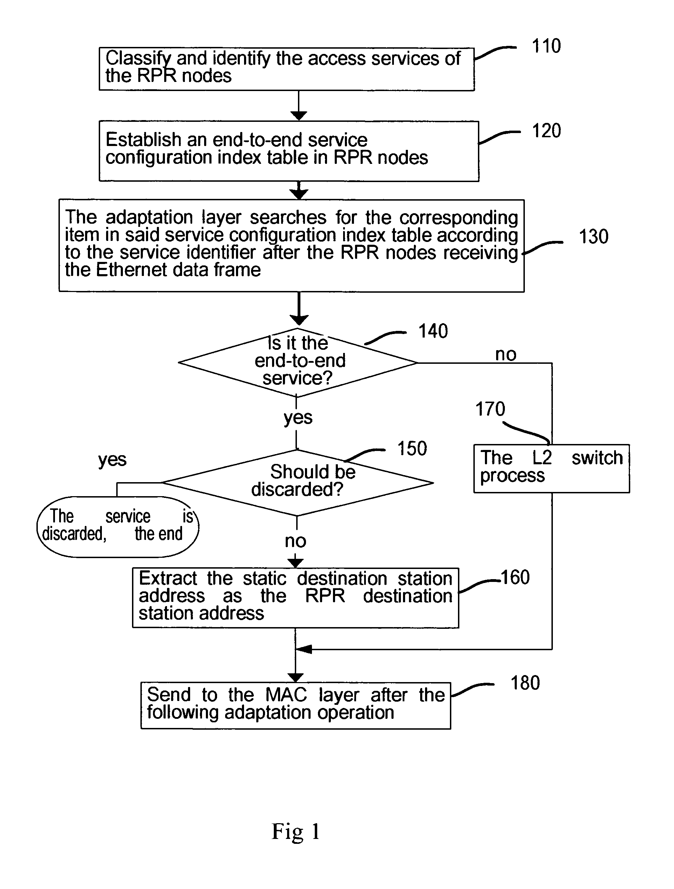

Figure 1 is the flowchart of the embodiment of this invention. As the figure shows, it includes the follow steps of:
Step 110, classifying and identifying the access services of RPR node;

The classification can be based on the Ethernet user port and identified with the VLAN ID (virtual LAN identifier), when the Ethernet frame includes MPLS label, the service can also be identified based on the MPLS label. These particular service identifiers are all included in the Ethernet data frame of the service.

When adopting the Ethernet user port to identify the service, the port number should be included in the Ethernet frame so that the destination station identifies which destination station port to send, certainly the port number can also be substituted by the VLAN ID.

Step 120, establishing an end-to-end service configuration index table over the RPR node. The index table is for indicating the end-to-end parameter of each service, including service identifier, end-to-end-enable, whether to discard or not, and static destination station address etc. Table 1 illustrates the structure of the index table:

**Table 1: End-to-end Configuration Index Table**

| Service Identifier | End-to-end-enable | Discard or not | Static Destination Station Address |
|---|---|---|---|
| P1 | Yes/No | Yes/No | 48bit Static Station Address |
| ... | ... | ... | ... |
| PN | Yes/No | Yes/No | 48bit Static Station Address |

Each service the users access corresponds to an item in the index table. The specific configuration value of the parameter is configured manually by the user according to the property of the service, wherein

End-to-end-enable indicates whether the service is end-to-end service or not, if yes, the static configuration is used to obtain the destination station address, if not, the destination station address is discovered automatically by the manner of learning and searching;

The "Discard or not" configuration is used to prevent the service from being filled into the invalid RPR destination station address when the RPR static destination station address which relates to the end-to-end configured services is an invalid address, under which condition, the bandwidth of the ring will be wasted. When the bit of "Discard or not" indicates "Yes", the service will be discarded and will not be transmitted to the ring. In the present embodiment, the static destination station address in the valid end-to-end services configured in the table is judged by a certain period according to the information of each station of the RPR ring network in the RPR topology database. When there is no such static destination station address in the topology database, an alarm should be reported and the service corresponding to the item is set as discard and prevented from being added to the ring. When the static destination station address exists in the topology database and is valid, the item is set as "discard not", so that the accuracy of the end-to-end service configuration index table can be ensured. However, RPR nodes can also identify real time whether the configured static destination station address is valid or not when sending (the invalid destination station address means the address does not belong to the station address in the RPR topology database, or it means a specified invalid address designated inside), sending when valid and removing when invalid. Thus, the bit configured will not be needed.

The destination station configuration refers to the RPR destination station address to which the service is sent. It is indicated when using the static configuration.

Step 130, the adaptation layer searching for the corresponding items in said end-to-end service configuration index table according to the service identifier information carried by the data frame after the RPR node receiving the Ethernet data frame;

Step 140, after receiving the searching results returned, the adaptation layer first judging whether the service to which the received data frame belongs is end-to-end service according to the end-to-end-enable configuration information, if yes, performing the next step, otherwise, performing step 170;

Step 150, judging whether the service should be discarded according to whether the discard configuration bit is valid (if there is no such configured bit, judging real time whether the corresponding static destination station is valid.), if the service should be discarded, discarding the service and then ending the processing, if the service should not be discarded, performing the next step;

Step 160, extracting the static destination station address from the searching results as the destination station address of the transmission on the Resilient Packet Ring, then performing step 180;

Step 170, performing L2 switch process; for the unicast frame, searching for the RPR destination station address of the frame according to the relationship between the learned Ethernet destination MAC address (generally, it also includes VLAN ID) and the RPR station address, and making the RPR destination station address be the destination station address to which the frame is transferred on the RPR network, if no such corresponding relationship is learned by the learning and searching unit, filling the broadcast RPR station address when adapting so that the unicast frame will be broadcasted over the RPR network; for non-unicast frame, broadcasting /multicasting directly over the RPR network; and

Step 180, sending to the Resilient Packet Ring MAC layer for processing after finishing the following adaptation operation. The services after the end-to-end processing further have to go through such adaptation layer-related processings as CoS classification, speed control, ring choosing, TTL(time to live) generation and so on, and be transformed to be the frame head identifiable by RPR MAC, then sent to the MAC layer for processing.

After the above steps, the services to be transmitted from end to end, carrying the designated static destination station address, will be sent to the RPR network. Each station on RPR network relays the frames to the designated destination station according to the static destination station address carried by the frames. The frame is removed from the ring network by the destination station and drops from the ring, then it is sent to the designated port for processing according to its carried identifier.

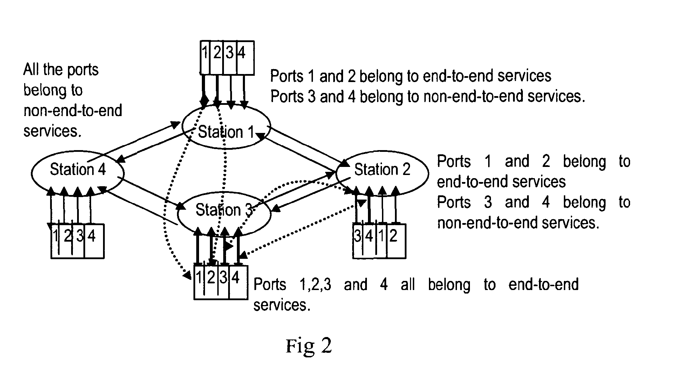

Figure 2 is the schematic view of networking for the embodiment of providing the end-to-end service on the Resilient Packet Ring. As shown in figure 2, there are two end-to-end services between station 1 and station 3 and two end-to-end services between station 2 and station 3, which are indicated by dotted lines, the other services are all ordinary services.

In the following, the realization of end-to-end service will be illustrated by taking the processing flow of port 1 of station 1 as an example:
Step A, in the present embodiment, the end-to-end service is classified based on the port, and the port number is identified with the VLAN ID (virtual LAN identifier), thereby configuring ports 1 of station 1 and station 3 with the same LAN identifier 1, ports 2 of station 1 and station 3 with the same LAN identifier 2, port 1 of station 2 and port 3 of station 3 with the same LAN identifier 3, port 2 of station 2 and port 4 of station 3 with the same LAN identifier 4. The above four end-to-end configuration services do not affect each other, and virtual private line service can be established after adding QoS guarantee; the rest ports of station 1 and station 2 and all the ports of station 4 can still work under ordinary switch manner, automatically finding the destination station address by learning and searching. In the figure, the values 1, 2, 3 and 4 in each port are the virtual LAN identifiers corresponding to the port;
Step B, station 1 establishes the end-to-end configuration index table with the virtual LAN identifier being the service identifier, the parameter of each service is determined through the user manual configuration. The index table after configuration is shown as table 2:

**Table 2: End-to-end Configuration Index Table of Station 1**

| Service Identifier | End-to-end enable | Discard or not | Static Destination Station Address |
|---|---|---|---|
| 1 | Yes | No | Station 3 |
| 2 | Yes | No | Station 3 |
| 3 | No | No | - |
| 4 | No | No | - |

Since the services corresponding to the service identifiers 3 and 4 are not end-to-end service, the parameters of the static destination station address do not need to be set. Port 1 of station 1 corresponds to service identifier 1, hereinafter called service 1 for short. The end-to-end-enable in the item corresponding to service 1 is valid, the static destination station address is the address of station 3, the configured bit of Discard or not is updated periodically according to the information of each station of RPR ring network in the RPR topology database. Under normal condition, it should be "discard not";
Step C, when port 1 of station 1 receives an Ethernet data frame, RPR adaptation layer first identifies the service according to the carried virtual LAN identifier, since the carried identifier is 1, the service is identified as service 1, then the RPR adaptation layer, in the end-to-end configuration index table of station 1, searches for the end-to-end configuration items corresponding to the index service 1 by using the virtual LAN identifier 1;
Step D, the adaptation layer receives returned searching results, including the following parameters: service 1 is an end-to-end service that is not to discard, the static destination station address is the address of station 3. Since service 1 is an end-to-end service, the switch process will not be performed, and the end-to-end configuration process will be performed directly. Also, since the static destination station address is a valid address, and the configured bit Discard or not is "discard not", the address of station 3 of the static configuration can be extracted directly to be the destination station address on the RPR network; and
Step E, after other RPR-related processings, the frame corresponding to service 1, carrying the designated destination station address (i.e. the address of station 3), is sent to the RPR network on the RPR frame head.

Now station 1 has finished the end-to-end service transmission from port 1 of station 1 to port 1 of station 3. The service carrying specific destination station address (the address of station 3) will be transmitted over the RPR network. When other in-between stations on the network detect the frame, they will find that the frame is a data frame to be transmitted to station 3, therefore they will not removed and get down the frame from the ring and they will relay the frame to station 3 directly. When station 3 receives the frame, it will find that the destination station address is identical with the address of the present station, then it removes and gets down the frame from the ring, wipes off the overhead of the RPR frame head, and transmits to the corresponding port 1 according to the virtual LAN identifier carried by the frame.

The process of reverse services and other end-to-end services is similar with the above and will not be described respectively.

From the above, it can be seen that the method of the present invention avoids the switch process, so that it provides the users with a more secure and effective end-to-end service, enlarges the application scope of devices and offers the users with more options.

The above embodiments can also have many alterations, for example, the configuration table can only be configured with end-to-end services, i.e. not including the identifier of non-end-to-end services. Thus, after receiving the data frames, the adaptation layer can directly search in the configuration table according to the carried identifier, if corresponding items are found, it means that the data frame belongs to the end-to-end service, otherwise, it doesn't belong to the end-to-end service and the manner of index will not be adopted. In addition, the invention is not limited to the above specific manners of classifying and identifying services.

### Industrial Applicability

Applied to the Resilient Packet Ring, this invention can realize end-to-end service without switch process.

## Claims

1. A method for providing end-to-end service on a resilient packet ring, wherein the end-to-end service refers to a service being provided from an end point to another end point on the resilient packet ring, **characterized in that** the method comprises the following steps of:
Step 1, classifying and identifying by an ingress resilient packet ring node access services of the resilient packet ring node (110);
Step 2, establishing an end-to-end service configuration table on the resilient packet ring node (120), the end-to-end service configuration table including service identifiers and corresponding static destination station addresses;
Step 3, searching by an adaptation layer for a corresponding item in said end-to-end service configuration table according to the service identifier carried in a data frame received by the resilient packet ring node (130);
Step 4, judging by the adaptation layer whether the service to which the received data frame belongs is end-to-end service or not after receiving a returned searching result (140), if yes, performing the next step, otherwise, performing step 7;
Step 5, judging whether the service should be discarded according to whether the static destination station address in the searching result is valid (150), if the static destination station address is invalid, discarding the service and ending the processing, otherwise performing the next step;
Step 6, extracting the static destination station address from the searching result as the destination station address to which the service is transmitted on the resilient packet ring (160), then performing step 8;
Step 7, performing by the adaptation layer a layer 2 switch process (170); and
Step 8, sending the data frame to a MAC layer of the resilient packet ring node for processing at the MAC layer after finishing subsequent adaptation operation at the adaptation layer (180).

2. The method of claim 1, wherein said end-to-end service configuration table further includes the information of whether the service should be discarded corresponding to the service identifier, moreover, the resilient packet ring node judges the static destination station addresses in the table periodically according to information of each station on the resilient packet ring in a resilient packet ring topology database, when a static destination station address in an item does not exist in the topology database, the service corresponding to the item is set to the information that the service should be discarded and forbidden to get onto the ring, if the static destination station address exists in the topology database and is valid, the service corresponding to the item is set to the information that the service should not be discarded, in said step 5, the information of whether the service should be discarded is obtained directly from the searching result.

3. The method of claim 1, wherein in said step 5, whether the static destination station address in the searching result is valid is judged in real time, if the static destination station address is valid, sending the service, otherwise, removing the service.

4. The method of claim 1, wherein said end-to-end service configuration table further includes end-to-end-enable information corresponding to the service identifier, in said step 3, the adaptation layer searches for the corresponding item in said end-to-end service configuration table according to the service identifier carried in the received data frame, and judges whether the service to which the received data frame belongs is end-to-end service according to the end-to-end-enable information in the searching result.

5. The method of claim 1, wherein only the currently valid end-to-end service items are configured in said end-to-end service configuration table, in said step 4, if the searching result reveals that there is no corresponding item, it can be determined that the service to which the received data frame belongs is not end-to-end service, if the searching result reveals that there is a corresponding item, it can be determined that the service to which the received data frame belongs is end-to-end service.

6. The method of any of claims 1 to 5, wherein in said step 1, the access services are classified according to Ethernet ports.

7. The method of any of claims 1 to 5, wherein in said step 1, the services are classified and identified by using Virtual LAN identifiers.

8. The method of any of claims 1 to 5, wherein in said step 1, the services are classified and identified by using Multi-protocol Label Switching labels.

## Patentansprüche

1. Ein Verfahren zum Bereitstellen eines Ende-zu-Ende-Dienstes auf einem RPR (Resilient Packet Ring), wobei sich der Ende-zu-Ende-Dienst auf einen Dienst bezieht, der von einem Endpunkt zu einem anderen Endpunkt auf dem RPR bereitgestellt wird, **dadurch gekennzeichnet, dass** das Verfahren die folgenden Schritte beinhaltet:
Schritt 1, durch einen Eingangs-RPR-Knoten, Klassifizieren und Identifizieren von Zugangsdiensten des RPR-Knotens (110);
Schritt 2, Erstellen einer Ende-zu-Ende-Dienst-Konfigurationstabelle auf dem RPR-Knoten (120), wobei die Ende-zu-Ende-Dienst-Konfigurationstabelle Dienstidentifikatoren und entsprechende statische Zielstationsadressen umfasst;
Schritt 3, durch eine Anpassungsschicht, Suchen nach einem entsprechenden Element in der Ende-zu-Ende-Dienst-Konfigurationstabelle gemäß dem Dienstidentifikator, der in einem Datenrahmen getragen wird, welcher von dem RPR-Knoten empfangen wird (130);
Schritt 4, durch die Anpassungsschicht, Beurteilen, ob der Dienst, zu dem der empfangene Datenrahmen gehört, ein Ende-zu-Ende-Dienst ist oder nicht, nachdem ein zurückgeführtes Suchergebnis empfangen wird (140), falls ja, Durchführen des nächsten Schrittes, andernfalls Durchführen von Schritt 7;
Schritt 5, Beurteilen, ob der Dienst verworfen werden soll, abhängig davon, ob die statische Zielstationsadresse in dem Suchergebnis gültig ist (150), falls die statische Zielstationsadresse ungültig ist, Verwerfen des Dienstes und Beenden der Verarbeitung, andernfalls Durchführen des nächsten Schrittes;
Schritt 6, Extrahieren der statischen Zielstationsadresse aus dem Suchergebnis als die Zielstationsadresse, an die der Dienst auf dem RPR übertragen wird (160), dann Durchführen von Schritt 8;
Schritt 7, durch die Anpassungsschicht, Durchführen eines Schicht-2-Schaltvorgangs (170); und
Schritt 8, Senden des Datenrahmens an eine MAC-Schicht des RPR-Knotens für die Verarbeitung an der MAC-Schicht nach dem Abschließen der nachfolgenden Anpassungsaktion an der Anpassungsschicht (180).

2. Verfahren gemäß Anspruch 1, wobei die Ende-zu-Ende-Dienst-Konfigurationstabelle ferner die Informationen umfasst, ob der Dienst entsprechend dem Dienstidentifikator verworfen werden soll, wobei zudem der RPR-Knoten die statischen Zielstationsadressen in der Tabelle gemäß den Informationen jeder Station auf dem RPR in einer RPR-Topologiedatenbank periodisch beurteilt, wobei, wenn eine statische Zielstationsadresse in einem Element in der Topologiedatenbank nicht existiert, der dem Element entsprechende Dienst auf die Informationen festgesetzt wird, dass der Dienst verworfen werden soll und dessen Eintritt in den Ring verboten werden soll, wobei, falls die statische Zielstationsadresse in der Topologiedatenbank existiert und gültig ist, der dem Element entsprechende Dienst auf die Informationen festgesetzt wird, dass der Dienst nicht verworfen werden soll, wobei in Schritt 5 die Informationen, ob der Dienst verworfen werden soll, direkt von dem Suchergebnis erhalten werden.

3. Verfahren gemäß Anspruch 1, wobei in Schritt 5 das Beurteilen, ob die statische Zielstationsadresse in dem Suchergebnis gültig ist, in Echtzeit durchgeführt wird, falls die statische Zielstationsadresse gültig ist, Senden des Dienstes, andernfalls Entfernen des Dienstes.

4. Verfahren gemäß Anspruch 1, wobei die Ende-zu-Ende-Dienst-Konfigurationstabelle ferner Ende-zu-Ende-Ermöglichungsinformationen entsprechend dem Dienstidentifikator umfasst, wobei in Schritt 3 die Anpassungsschicht in der Ende-zu-Ende-Dienst-Konfigurationstabelle gemäß dem in dem empfangenen Datenrahmen getragenen Dienstidentifikator nach dem entsprechenden Element sucht und beurteilt, ob der Dienst, zu dem der empfangene Datenrahmen gehört, gemäß den Ende-zu-Ende-Ermöglichungsinformationen in dem Suchergebnis ein Ende-zu-Ende Dienst ist.

5. Verfahren gemäß Anspruch 1, wobei in der Ende-zu-Ende-Dienst-Konfigurationstabelle lediglich die gegenwärtig gültigen Ende-zu-Ende-Dienst-Elemente konfiguriert sind, wobei in Schritt 4, falls das Suchergebnis ergibt, dass es kein entsprechendes Element gibt, bestimmt werden kann, dass der Dienst, zu dem der empfangene Datenrahmen gehört, kein Ende-zu-Ende-Dienst ist, wobei, falls das Suchergebnis ergibt, dass es ein entsprechendes Element gibt, bestimmt werden kann, dass der Dienst, zu dem der empfangene Datenrahmen gehört, ein Ende-zu-Ende-Dienst ist.

6. Verfahren gemäß einem der Ansprüche 1 bis 5, wobei in Schritt 1 die Zugangsdienste gemäß Ethernet-Ports klassifiziert werden.

7. Verfahren gemäß einem der Ansprüche 1 bis 5, wobei in Schritt 1 die Dienste unter Verwendung von VLAN-Identifikatoren klassifiziert und identifiziert werden.

8. Verfahren gemäß einem der Ansprüche 1 bis 5, wobei in Schritt 1 die Dienste unter Verwendung von Multiprotocol-Label-Switching-Labels klassifiziert und identifiziert werden.

## Revendications

1. Une méthode pour fournir un service de bout en bout sur un anneau de paquets résilient, dans laquelle le service de bout en bout se rapporte à un service qui est fourni depuis un point d'extrémité vers un autre point d'extrémité sur l'anneau de paquets résilient, **caractérisée en ce que** la méthode comprend les étapes suivantes :
Étape 1, faire classer et identifier, par un noeud d'entrée de l'anneau de paquets résilient, des services d'accès du noeud de l'anneau de paquets résilient (110) ;
Étape 2, établir une table de configuration du service de bout en bout sur le noeud de l'anneau de paquets résilient (120), la table de configuration du service de bout en bout incluant des identifiants de service et des adresses de stations de destination statiques correspondantes ;
Étape 3, faire rechercher par une couche d'adaptation, un élément correspondant dans ladite table de configuration du service de bout en bout en fonction de l'identifiant de service transporté dans une trame de données reçue par le noeud de l'anneau de paquets résilient (130) ;
Étape 4, faire juger par la couche d'adaptation si le service auquel appartient la trame de données reçue est un service de bout en bout ou non après avoir reçu en retour un résultat de recherche (140), si oui, réaliser la prochaine étape, sinon, réaliser l'étape 7 ;
Étape 5, juger si le service devrait être supprimé selon que l'adresse de station de destination statique dans le résultat de recherche est valide (150), si l'adresse de station de destination statique est invalide, supprimer le service et terminer le traitement, sinon réaliser la prochaine étape ;
Étape 6, extraire l'adresse de station de destination statique du résultat de recherche comme étant l'adresse de station de destination à laquelle le service est transmis sur l'anneau de paquets résilient (160), puis réaliser l'étape 8 ;
Étape 7, faire réaliser par la couche d'adaptation un processus de commutation de couche 2 (170) ; et
Étape 8, envoyer la trame de données à une couche MAC du noeud de l'anneau de paquets résilient en vue d'un traitement au niveau de la couche MAC après avoir achevé l'opération d'adaptation ultérieure au niveau de la couche d'adaptation (180).

2. La méthode de la revendication 1, dans laquelle ladite table de configuration du service bout en bout inclut en outre les informations indiquant si le service devrait être supprimé correspondant à l'identifiant de service, en sus, le noeud de l'anneau de paquets résilient juge périodiquement les adresses de stations de destination statiques dans la table en fonction d'informations de chaque station sur l'anneau de paquets résilient dans une base de données de topologies d'anneau de paquets résilient, quand une adresse de station de destination statique dans un élément n'existe pas dans la base de données de topologies, le service correspondant à l'élément est réglé sur l'information suivant laquelle le service devrait être supprimé et son entrée dans l'anneau devrait être interdite, si l'adresse de station de destination statique existe dans la base de données de topologies et est valide, le service correspondant à l'élément est réglé sur l'information suivant laquelle le service ne devrait pas être supprimé, dans ladite étape 5, l'information indiquant si le service devrait être supprimé est obtenue directement à partir du résultat de recherche.

3. La méthode de la revendication 1, dans laquelle dans ladite étape 5, il est procédé à un jugement en temps réel pour savoir si l'adresse de station de destination statique dans le résultat de recherche est valide, si l'adresse de station de destination statique est valide, envoyer le service, sinon, enlever le service.

4. La méthode de la revendication 1, dans laquelle ladite table de configuration du service de bout en bout inclut en outre des informations de validation de bout en bout correspondant à l'identifiant de service, dans ladite étape 3, la couche d'adaptation recherche l'élément correspondant dans ladite table de configuration du service de bout en bout en fonction de l'identifiant de service transporté dans la trame de données reçue, et juge si le service auquel appartient la trame de données reçue est un service de bout en bout en fonction des informations de validation de bout en bout dans le résultat de recherche.

5. La méthode de la revendication 1, dans laquelle seuls les éléments du service de bout en bout actuellement valides sont configurés dans ladite table de configuration du service de bout en bout, dans ladite étape 4, si le résultat de recherche révèle qu'il n'existe aucun élément correspondant, il peut être déterminé que le service auquel appartient la trame de données reçue n'est pas un service de bout en bout, si le résultat de recherche révèle qu'il existe un élément correspondant, il peut être déterminé que le service auquel appartient la trame de données reçue est un service de bout en bout.

6. La méthode de n'importe lesquelles des revendications 1 à 5, dans laquelle dans ladite étape 1, les services d'accès sont classés suivant des ports Ethernet.

7. La méthode de n'importe lesquelles des revendications 1 à 5, dans laquelle dans ladite étape 1, les services sont classés et identifiés en utilisant des identifiants de LAN virtuel.

8. La méthode de n'importe lesquelles des revendications 1 à 5, dans laquelle dans ladite étape 1, les services sont classés et identifiés en utilisant des étiquettes de commutation multiprotocole par étiquette.
